# EUROPEAN PATENT APPLICATION

(11) **EP 1 924 099 A1**
(43) Date of publication of application: **21.05.2008**
(21) Application number: 07016093.2
(22) Date of filing: 16.08.2007
(51) Int. Cl.: H04N 7/26, H04N 7/46, H04N 7/01

(54) **Frame interpolating circuit, frame interpolating method, and display apparatus**

(30) Priority: 08.09.2006 JP 2006244461
(71) Applicant: Kabushiki Kaisha Toshiba, Minato-ku, Tokyo 105-8001 (JP)
(72) Inventor: Sato, Ko, Tokyo 105-8001 (JP); Yamasaki, Masaya, Tokyo 105-8001 (JP); Hirayama, Keiko, Tokyo 105-8001 (JP); Yoshimura, Hiroshi, Tokyo 105-8001 (JP); Hamakawa, Yohei, Tokyo 105-8001 (JP); Douniwa, Kenichi, Tokyo 105-8001 (JP); Ogawa, Yoshihiko, Tokyo 105-8001 (JP)
(74) Representative: HOFFMANN EITLE

(57) **Abstract**

According to one embodiment, there is provided a frame interpolating circuit including a detecting unit (21, 22) which compares a first frame image (F1) and a second frame image (F2) from an input image signal (I₁) with each other and detects a plurality of motion vectors in the frames, a limiting unit (13) which limits values of the detected motion vectors in predetermined regions (A_{LU1} to A_{LU3}) in the frames to a value equal to or smaller than a predetermined value, and an interpolated frame generating unit (14) which generates an interpolated frame (F3) on the basis of the plurality of motion vectors from the detecting unit, the motion vectors the values of which are limited and which are output from the limiting unit, and the first frame image and the second frame image.

## Description

One embodiment of the invention relates to a frame interpolating circuit and a frame interpolating method which detect and use a motion vector, and a display apparatus using the frame interpolating circuit and the frame interpolating method.

In recent years, with development of a digital video technique, a demand for high image quality and high quality of a video has been high. In accordance with this, a frame interpolating process which generates and adds an interpolated image to each frame image of the video to more smoothly and naturally express motion of the video is known.

In such frame interpolating process, a block motion vector of images is detected, and motion compensation is performed depending on the degree of motion of the motion vector to generate an interpolated image.

In Patent Document 1 (Jpn. Pat. Appln. KOKAI Publication No. 02-44883), the following technique is disclosed. That is, when a moving portion and a still portion are mixed with each other in a block, motion compensation is performed by a matching method using the moving portion, and the still portion is not used in the motion compensation.

However, in the conventional technique in Patent Document 1, a still image of a logo such as a broadcast station which is subjected to a blending process in a screen of television broadcast and shown up on a normal video image has a luminance component and a color component which are not considerably different from those of a background image. Therefore, in a block including a still object which is smaller than a block size used in block matching, when a background video image moves, it is determined the still image moves together with the background image. As a result, an interpolated image may be disadvantageously broken.

An object of the present invention is to provide a frame interpolating process apparatus, a frame interpolating process method, and a display apparatus which stably display even a still image such as a logo of a broadcast station displayed at a corner or the like of a screen.

One embodiment for achieving the object is a frame interpolating circuit comprising:
a detecting unit (21, 22) which compares a first frame image (F1) and a second frame image (F2) from an input image signal (I₁) with each other and detects a plurality of motion vectors in the frames;
a limiting unit (13) which limits values of the detected motion vectors in predetermined regions (A_{LU1} to A_{LU3}) in the frames to a value equal to or smaller than a predetermined value; and
an interpolated frame generating unit (14) which generates and outputs an interpolated frame (F3) on the basis of said plurality of motion vectors from the detecting unit, the motion vectors the values of which are limited and which are output from the limiting unit, and the first frame image and the second frame image.

There are provided a frame interpolating process apparatus and a frame interpolating process method which stably display even a still image such as a logo of a broadcasting station displayed at a corner or the like of a screen.

The invention can be more fully understood from the following detailed description when taken in conjunction with the accompanying drawings, in which:
FIG. 1 is a block diagram showing an example of a configuration of a frame interpolating circuit according to an embodiment of the present invention;
FIG. 2. is a diagram for explaining an example of a former frame and a later frame handled by a frame interpolating circuit according to an embodiment of the present invention;
FIG. 3 is a diagram for explaining an example of a frame with a motion vector including a ghost caused by erroneous interpolation handled by a frame interpolating circuit according to an embodiment of the present invention;
FIG. 4 is a diagram for explaining an example of a frame with a motion vector clipped at an upper left corner by a frame interpolating circuit according to an embodiment of the present invention;
FIG. 5 is a diagram for explaining an example of a frame with a motion vector clipped at four corners by a frame interpolating circuit according to an embodiment of the present invention;
FIG. 6 is a diagram for explaining an example of a frame with a motion vector clipped at a left-side region and a right-side region by a frame interpolating circuit according to an embodiment of the present invention; and
FIG. 7 is a block diagram showing an example of a configuration of a display apparatus including a frame interpolating circuit according to an embodiment of the present invention.

An embodiment of the present invention provides a frame interpolating process apparatus, a frame interpolating process method, and a display apparatus which stably display a still image such as a logo of a broadcast station displayed at a corner or the like of a screen.

One embodiment for achieving the object is a frame interpolating circuit comprising:
a detecting unit (21, 22) which compares a first frame image (F1) and a second frame image (F2) with each other from an input image signal (I₁) and detects a plurality of motion vectors in the frames;
a limiting unit (13) which limits values of the detected motion vectors in predetermined regions (A_{LU1} to A_{LU3}) in the frames to a value equal to or smaller than a predetermined value; and
an interpolated frame generating unit (14) which generates and outputs an interpolated frame (F3) on the basis of said plurality of motion vectors from the detecting unit, the motion vectors the values of which are limited and which are output from the limiting unit, and the first frame image and the second frame image.

In this manner, there are provided a frame interpolating process apparatus and a frame interpolating process method which stably display a still image such as a logo of a broadcast station displayed at a corner or the like of a screen.

An embodiment of the present invention will be described below in detail with reference to the accompanying drawings.

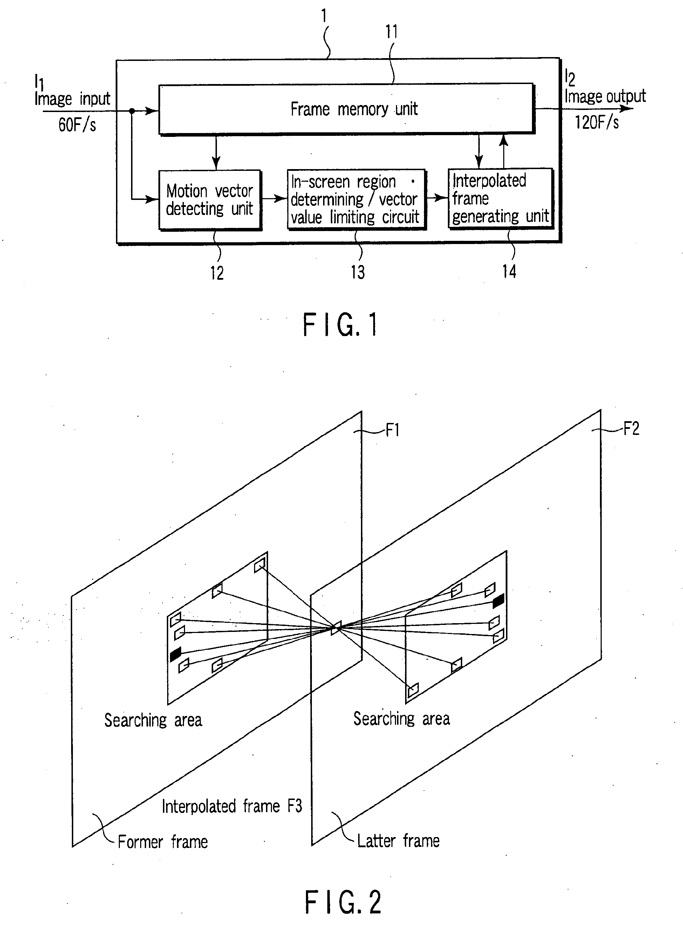

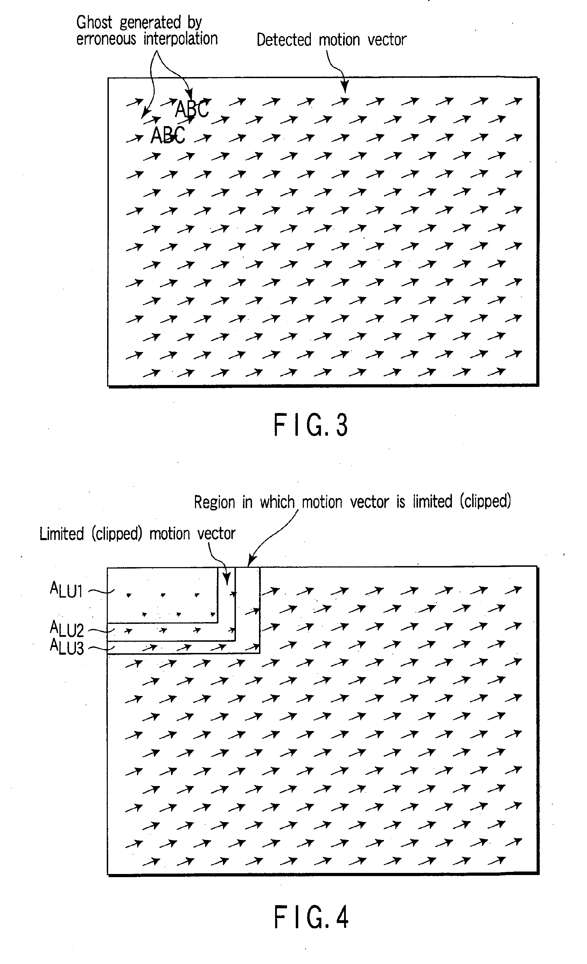

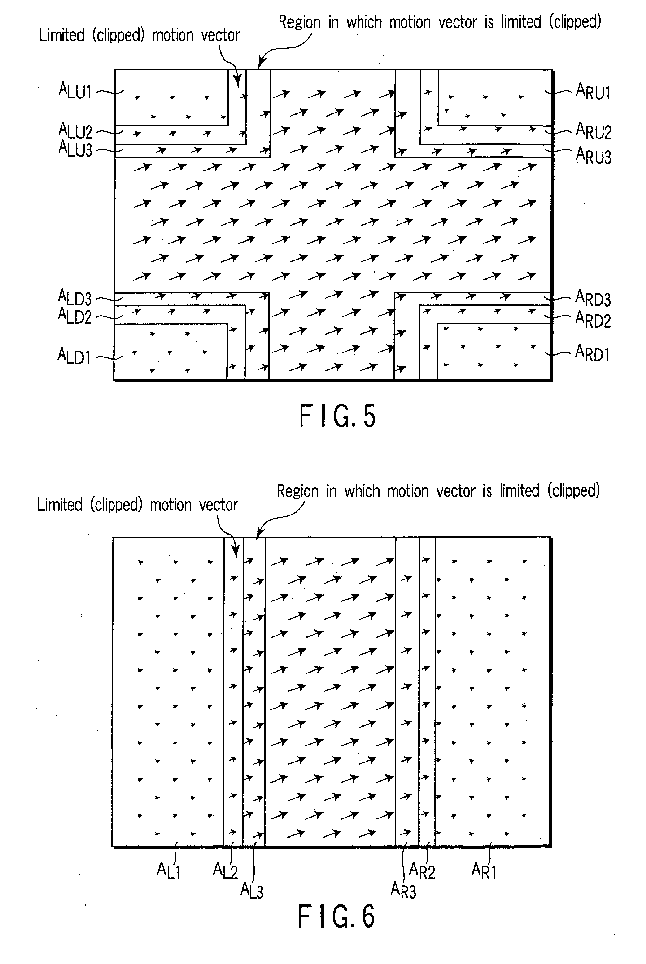

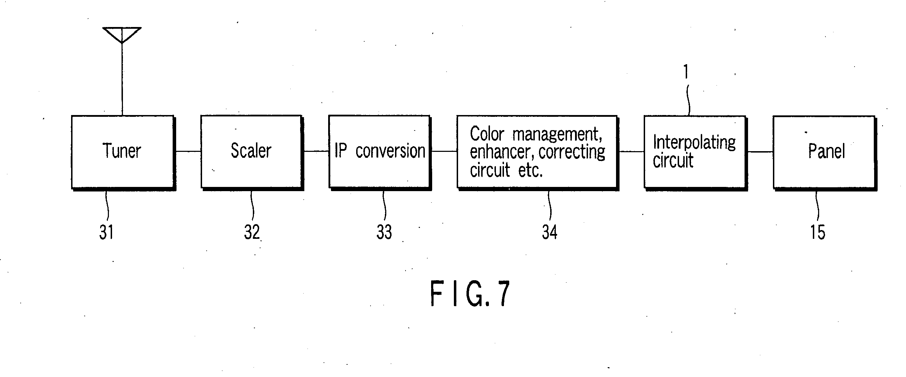

FIG. 1 is a block diagram showing an example of a configuration of a frame interpolating circuit according to an embodiment of the present invention. FIG. 2 is a diagram for explaining an example of a former frame and a latter frame handled by a frame interpolating circuit according to an embodiment of the present invention. FIG. 3 is a diagram for explaining an example of a frame with a motion vector including a ghost caused by erroneous interpolation handled by a frame interpolating circuit according to an embodiment of the present invention. FIG. 4 is a diagram for explaining an example of a frame with a motion vector clipped at an upper left corner by a frame interpolating circuit according to an embodiment of the present invention. FIG. 5 is a diagram for explaining an example of a frame with a motion vector clipped at four corners by a frame interpolating circuit according to an embodiment of the present invention. FIG. 6 is a diagram for explaining an example of a frame with a motion vector clipped at a left-side region and a right-side region by a frame interpolating circuit according to an embodiment of the present invention. FIG. 7 is a block diagram showing an example of a configuration of a display apparatus including a frame interpolating circuit according to an embodiment of the present invention.

### <Frame Interpolating Circuit according to One Embodiment of the Present Invention>

### (Configuration and Basic Operation)

First, an example of a frame interpolating circuit according to an embodiment of the present invention will be described below with reference to FIG. 1. A frame interpolating circuit 1, in FIG. 1, for example, has a frame memory 11 which receives an input image signal I₁ having 60 frames/second of RGB standards or YCBCr standards as an example and outputs an output image signal I₂ having 120 frames/second as an example, and a motion vector detecting unit 12 which compares pixel values of a past frame (F1) and a present frame (F2) stored in the frame memory 11 to generate a motion vector by using symmetric searching, block matching, or the like.' Furthermore, the frame interpolating circuit 1 has an in-screen region determining/vector value limiting circuit 13 which performs a vector value limiting process (described later), and an interpolated frame generating unit 14 which generates an interpolated frame (F3) on the basis of the past frame (F1) and the present frame (F2) from the motion vector detecting unit 12 and the motion vector generated by the motion vector detecting unit 12.

A basic operation of the frame interpolating circuit 1 will be described below in detail.

By the functions of the motion vector detecting unit 12, as shown in FIG. 2, a motion vector is detected from the input image signal (I₁) based on a past frame image (F1) and a present frame image (F2). The in-screen region determining/vector value limiting circuit 13 limits the motion vector such that only values of vectors in a predetermined region (described later) are made equal to or less than a predetermined value.

The interpolated frame generating unit 14 receives a plurality of motion vectors, the vector values of which are partially limited, from the in-screen region determining/vector value limiting circuit 13 and generates an interpolated image (F3) on the basis of the past frame image (F1) and the present frame image (F2) from the input image signal (I₁) to output the interpolated image (F3) to the frame memory 11. The frame memory 11 outputs the past frame image (F1), the interpolated image (F3), and the present frame image (F2) to the subsequent part in the order named.

A defect of a logo or the like appearing on a screen and an operation of a vector limiting circuit which eliminates the defect will be described below in detail with reference to the accompanying drawings.

### (Operation of Vector Value Limiting Circuit 13)

### Defective Display of Logo or the like

In the motion vector detecting unit 12, as a motion vector detecting method using block matching, the following method or the like is used. That is, a block having a predetermined shape is parallel moved symmetrically about a point on two former and latter frames which sandwich an insertion position of an interpolated frame image, differences of pixel values of pixels at the corresponding positions are calculated with respect to all pixels in the block to calculate an accumulated value (SAD: Sum of Absolute Difference) of the differences, and a direction in which the SAD value is minimum is used as a motion vector of the block.

In the block matching method which checks similarity of the entire block to estimate a motion vector, a broadcast station logo "ABC" or the like subjected to a blend process and shown on a normal video image as shown in FIG. 3 has a luminance component and a color component which are not different from those of a background video image. Therefore, in a block including a still object smaller than a block size used when block matching is performed, when a background video image is moving, it is determined that the logo image moves together with the background image, and defective display occurs in an interpolated image. For example, ghost is generated as shown in FIG. 3.

### Concrete Example of Clipping Process (Limiting Process)

As a countermeasure against such defective display of the still image such as the logo, a method of clipping a vector value (properly regulated to be equal to or smaller than a predetermined value and fixed) with respect to a specific region and processing a logo image as a still image is preferably performed.

More specifically, a logo or the like of a broadcast station is mostly shown at one of the four corners of a screen not to disturb a video image. In this case, in a normal video image, a video image interested by a viewer is present at a center of the screen. For this reason, the viewer rarely pays attention to the peripheral portion of the screen. A main object of interpolated frame formation is to improve moving image blur. However, in consideration of the above point, it is understood that an effect of improving a moving image blur sensed by the viewer is large at the center of the screen and small at the peripheral portion of the screen. However, on the other hand, a sensitivity to the feeling of moving image blur at the peripheral portion of the screen is not high, but a sensitivity to an erroneously interpolated video image at the peripheral portion of the screen is high to some extent. This is recognized as a broken video image.

A limiting process according to an embodiment of the present invention has been made in consideration of the above point. In an interpolated frame forming method which detects a motion vector, an interpolated frame is formed by using a vector, the detected vector value of which is clipped to a predetermined value in a specific region in one screen (limited to be equal to or smaller than a predetermined value as needed). In this manner, a video image is suppressed from being broken by erroneously interpolating the broadcast station logo or the like while keeping the effect of improving moving image blur.

The process will be described below by citing concrete numerical values.

It is assumed that, as an amount of motion between a former frame and a latter frame, motion up to 20 pixels in a horizontal direction and up to 8 pixels in a vertical direction is detected by block matching. In this case, an entire input video image moves at 16 pixels/frame to the right in the horizontal direction and 6 pixels/frame on the upper side in the vertical direction, and it is a semitransparent broadcast station logo standing still at the upper left corner of the screen is shown on the video image. In the following description, a motion vector to be detected is expressed as a moving distance of an object within transition time from the former frame to the interpolated frame or the interpolated frame to the rear frame.

When the video image is input, a motion vector having 8 pixels in an nearly horizontal direction and 3 pixels in a vertical direction is detected in a region in which a logo is not shown by the block matching process. In a region on which the logo is shown, a result depends on luminance and color components of a background video image and luminance and color components of the logo. As in the region on which the logo is not shown, the embodiment will be described below with reference to an example in which a motion vector having 8 pixels in a horizontal direction and 3 pixels in a vertical direction is detected.

In the interpolated frame forming method in which no clipping process (value is limited to be equal to or smaller than a predetermined value as needed) is performed, a motion vector detected by block matching is directly used to form an interpolated frame. Therefore, as described above, a frame which is erroneously interpolated like ghost at an obliquely upper portion or an obliquely lower portion of the original logos as shown in FIG. 3 may be generated. When noise like ghost is generated on an interpolated frame, the frame stands out as a broken video image.

In order to solve this problem, in a clipping process for a vector value (limited to be equal to or smaller than a predetermined value as needed), as shown in FIG. 4, an interpolated frame is formed by using values obtained by clipping motion vectors detected by block matching at corner regions A_{LU1}, A_{LU2}, and A_{LU3} on the upper left of the screen.

In this manner, noise like ghost generated around the logo is reduced. On the other hand, with respect to a background video image actually moving, motion correction is erroneous. For this reason, the feeling of blur is stronger in the clipping process (limiting process) than in a normal process. However, as described above, it can be said in a comprehensive manner that an influence by the increase of the feeling of blur is small.

Here, when an amount of clip of a motion vector is sharply changed, the image looks unnatural at the boundary portion. For this reason, as shown in FIG. 4, the regions A_{LU1}, A_{LU2}, and A_{LU3} in which amounts of clip are gradually changed are set to make it possible to suppress generation of the defect.

In the embodiment, more specifically, for example, a motion vector detected in the region A_{LU1} closest to the corner on the upper left of the screen is clipped by 2 pixels in the horizontal direction and one pixel in the vertical direction, a motion vector detected in the region A_{LU2} first next to the region A_{LU1} is clipped by 4 pixels in the horizontal direction and 2 pixels in the vertical direction, a motion vector detected in the region A_{LU3} first next to the region A_{LU2} is clipped in 6 pixels in the horizontal direction and 3 pixels in the vertical direction, and motion vectors detected by the vector detecting unit are directly used in the other regions.

In this manner, while maintaining the effect of improving motion vector blur, a broken video image generated by erroneously interpolating a broadcast station logo or the like can be reduced.

A method of changing a clip value of a motion vector is not limited to the example. In addition to a motion having an accuracy in units smaller than pixels such as an accuracy in units of 0.5 pixels, the clip value can also be changed in finer steps.

By the clipping process (reducing process) of a vector value, breakdown caused by erroneous detection of a motion vector can be reduced with respect to a video image including a broadcast station logo or the like.

### (Another Embodiment)

As another embodiment of the clipping process (reducing process) of the vector value limiting circuit 13 described above, when the four corners of a frame are used as specific regions as shown in FIG. 5, the left or right side of the frame is preferably used as the specific region as shown in FIG. 6.

More specifically, as shown in FIG. 5, at the four corners of the frame, upper left specific regions A_{LU1}, A_{LU2}, and A_{LU3}, lower left specific regions A_{LD1}, A_{LD2}, and A_{LD3}, upper right specific regions A_{RU1}, A_{RU2}, and A_{RU3}, and lower right specific regions A_{RD1}, A_{RD2}, and A_{RD3} are set by stepwisely increasing clip values. In this manner, a logo can be protected regardless of which corner displays the logo.

As shown in FIG. 6, on the left and right sides of the frame, more specifically, specific regions A_{L1}, A_{L2}, and A_{L3} on the left side and specific regions A_{R1}, A_{R2}, and A_{R3} on the right side are set by stepwisely increasing clip values. In this manner, in either case where a logo is displayed on the left side or the right side, the logo can be protected.

### <Panel Display Apparatus using Frame Interpolating Circuit according to One Embodiment of the Present Invention>

An example of a panel display apparatus using the above frame interpolating circuit will be described below in detail with reference to FIG. 10.

A panel display apparatus 30 using a frame interpolating circuit 1 has, as an example, a tuner unit 31 which outputs a broadcasting signal as a video signal, a scaler 32 which performs scaling process of the video signal, an IP converting unit 33 which performs IP conversion of the video signal, a processing unit 34 which includes color management, enhancer, a correcting circuit, and the like, the frame interpolating circuit 1 described above, and a panel unit 15 such as a liquid crystal display unit or an FPD (Flat Panel Display) which receives an output from the frame interpolating circuit 1.

The panel display apparatus 30 having such a configuration causes the frame interpolating circuit 1 to perform a clipping process (limiting process) of vector values in specific regions such as four corners as described above to make it possible to display a still image such as a logo without breakdown. For this reason, a smooth and natural video image can be displayed by using an interpolated frame without breaking the video image.

According to various embodiments described above, a person skilled in the art can realize the present invention. The person skilled in the art can conceive of various modifications of the embodiments and can apply the present invention to various embodiments without inventive ability. Therefore, the present invention covers in wide ranges consistent with the disclosed principle and the novel characteristics, and is not limited to the embodiments described above.

## Claims

1. A frame interpolating circuit **characterized by** comprising:
a detecting unit (12) which compares a first frame image and a second frame image from an input image signal with each other and detects a plurality of motion vectors in the frames;
a limiting unit (13) which limits values of the detected motion vectors in predetermined regions in the frames to a value equal to or smaller than a predetermined value; and
an interpolated frame generating unit (14) which generates and outputs an interpolated frame on the basis of said plurality of motion vectors from the detecting unit, the motion vectors the values of which are limited and which are output from the limiting unit, and the first frame image and the second frame image.

2. The frame interpolating circuit according to claim 1, **characterized in that** the limiting unit has said plurality of predetermined regions in which the predetermined value is stepwisely changed.

3. The frame interpolating circuit according to claim 1, **characterized in that** the limiting unit arranges the predetermined regions at four corners of the frame.

4. The frame interpolating circuit according to claim 1, **characterized in that** the limiting unit arranges the predetermined regions on left and right sides of the frame.

5. A frame interpolating method **characterized by** comprising:
comparing a first frame image and a second frame image from an input image signal and detecting both the images with each other and detecting a plurality of motion vectors in the frames;
limiting values of the detected motion vectors in predetermined regions in the frames to a value equal to or smaller than a predetermined value; and
generating and outputting an interpolated frame on the basis of said plurality of motion vectors, the motion vectors the values of which are limited, and the first frame image and the second frame image.

6. The frame interpolating method according to claim 5, **characterized by** further comprising said plurality of predetermined regions in which the predetermined value is stepwisely changed.

7. The frame interpolating method according to claim 5, **characterized in that** the predetermined regions are arranged at four corners of the frame.

8. The frame interpolating method according to claim 5, **characterized in that** the predetermined regions are arranged on left and right sides of the frame.

9. A display apparatus **characterized by** comprising:
a detecting unit (12) which comparing a first frame image and a second frame image with each other and detects a plurality of motion vectors in the frames;
a limiting unit (13) which limits values of the detected motion vectors in predetermined regions in the frames to a value equal to or smaller than a predetermined value;
an interpolated frame generating unit (14) which generates and outputs an interpolated frame on the basis of said plurality of motion vectors from the detecting unit, the motion vectors the values of which are limited and which are output from the limiting unit, and the first frame image and the second frame image; and
a panel unit (15) which displays the first and second frame images and the interpolated image on a screen.

10. The display apparatus according to claim 9, **characterized in that** the limiting unit has said plurality of predetermined regions in which the predetermined value is stepwisely changed.
